# EUROPEAN PATENT APPLICATION

(11) **EP 4 610 794 A1**
(43) Date of publication of application: **03.09.2025**
(21) Application number: 23882024.5
(22) Date of filing: 06.10.2023
(51) Int. Cl.: G06F 3/048, G06F 16/40

(54) **MULTIMEDIA AUTONOMOUS ELECTRONIC SURVIVAL DEVICE**

(30) Priority: 24.10.2022 ES 202231759 U
(71) Applicant: Alegre Maso, Benjami, 08830 Sant Boi de Llobregat (Barcelona) (ES)
(72) Inventor: Alegre Maso, Benjami, 08830 Sant Boi de Llobregat (Barcelona) (ES)
(74) Representative: Sahuquillo Huerta, Jesús
(86) International application number: PCT/ES2023/000023
(87) International publication number: WO 2024/089300

(57) **Abstract**

The present invention relates to a multimedia autonomous electronic survival device characterized in that it consists of at least a hardware base (21) formed by a motherboard (1) equipped with an electronic microprocessor, and an internal memory (2). A series of input and output periphery elements including a touch screen (3), a battery (4) and an electric power source (S) of the set are connected to the motherboard, all of which are contained in a mechanical casing (6). The internal memory (2) contains a database containing ordered and structured knowledge on survival and its techniques. The device is equipped with software having a visual and acoustic interface that allows access to the information of the database through the input and output peripherals, incorporating a radiofrequency receiver and emitter (10) for communication and a GPS positioner (9) for positioning that are connected to the motherboard (1), and the power source (5) incorporating autonomous and renewable power supply elements that can additionally be connected to the electrical grid.

## Description

### TECHNICAL FIELD

The present invention falls within the field of nature and survival equipment, specifically in the field of multimedia devices for these purposes.

### BACKGROUND

Climate change, understood as the increase in temperatures over time due to human action through emissions of greenhouse gases into the atmosphere, is changing weather patterns and altering the normal balance of nature. This poses many risks to humans and all other forms of life on Earth.

For example, climate change is already making heat waves more frequent and intense and is leading to an increase in extreme rainfall events during hurricanes and non-tropical flash floods, as well as the increased frequency and severity of fires and droughts. The result is an increase in all types of natural disasters.

In addition, the increase in global political instability and the possible increase in conflicts and wars also increases the probability of future catastrophes of this origin, which, together with the loss of human lives, cause the destruction of key infrastructures for the survival of communities.

Currently, the education of young people is aimed at preparing them for incorporation into society at the most current and foreseeable time possible. The knowledge necessary for survival in situations of natural or human catastrophe is put on the back burner and is not usually explained in the absence of a specific situation.

As a result, most people do not have the necessary knowledge to survive in many natural disaster situations, despite having a great deal of scientific knowledge at their disposal.

This knowledge necessary for survival has been accumulated and shared by our species for millions of years. And, in some way, this fact has contributed to making us the dominant species on the planet.

Much information of this type can be found on the Internet and other sources, but in an unstructured form that requires criteria to distinguish truthful and correct information from that which is not.

In the event of a natural disaster, the first action is usually to request help from the authorities, but access to communication networks may be limited or impossible due to the effects of the disaster. In addition, commonly used mobile devices do not have specific communication systems used by rescue and emergency services other than telephone networks.

For this same reason, access to survival information via the Internet may be impossible at the very moment when it is needed. In addition, along with the lack of connectivity, limited access to energy sources in the event of disasters may make the use of commonly available electronic and mobile devices unfeasible.

For all these reasons, there is an unmet need in the market for autonomous devices that can make the knowledge of survival techniques available in an orderly fashion to survivors of natural disasters or other types of catastrophes, without the need for prior preparation, being available in situations where there is no connection to the electricity grid or telephone or internet connectivity, being able to interact with them tactilely and through voice and having the possibility of emitting and receiving emergency signals.

In addition to its use as an element of practical survival, it is also desirable to use it as a pedagogical and recreational tool for the dissemination of survival knowledge.

Beyond survival techniques, in case of more extreme situations at a planetary level, it is desirable that such devices can contain all the necessary information, not only for survival, but for the reconstruction or creation of a new civilization. This implies that the device can house a good part of all the knowledge accumulated by humanity from the most ancient times to the present, from the most elementary principles of survival to a developed society. This adds to survival the capacity to offer the necessary knowledge to technically recompose the environment. At present, there are no known devices specifically designed for these purposes.

### EXPLANATION OF THE INVENTION

The object of the present invention is to obtain a multimedia autonomous electronic survival device that makes the knowledge of survival techniques available in an orderly manner to survivors of natural disasters or other types of catastrophes, without the need for prior preparation and offering the necessary knowledge to technically recompose the environment, It is available in situations where there is no connection to the electricity grid or telephone or internet connectivity, and can be interacted with by touch and voice, with the possibility of emitting and receiving emergency signals, and can also be used as a pedagogical and recreational tool for the dissemination of survival knowledge.

The multimedia autonomous electronic survival device object of the present invention is formed, at least, by a base hardware formed by a base plate provided with an electronic microprocessor and connected to it, an internal memory, a series of input and output peripheral elements among which is a touch screen, a battery and an electric power supply of the whole, all this in mounted in a mechanical enclosure.

The power supply, in addition to being able to connect to the mains, incorporates elements of autonomous and renewable energy supply, such as a dynamo to charge the battery and a photovoltaic solar energy plate or plates for the same purpose, so that the device can operate autonomously in the absence of the mains.
power supply. The power supply is equipped with random current rectification to adapt to these renewable energy sources.

The internal memory is equipped with a replication system or RAID (redundant array of independent disks) and contains a database containing knowledge about survival and its techniques in an orderly and structured manner.

The system can also incorporate an external memory system with a backup of the internal memory, connecting to the motherboard through an external port.

The device contains software with a visual and acoustic interface valid for any system that allows access to the database information through the input and output peripherals, running on any of the operating systems available on the market.

The input peripherals consist of a microphone, a camera, a keyboard and the touch capability of the display, and the output peripherals consist of the display, speakers and a port for headphone connection. Additionally, the device may also incorporate as output peripherals a hologram projector.

In this way, the user can access the information in the database through menus on the touch screen and oral commands through the microphone, receiving the information visually on the screen by means of image, video and text, and by sound through speakers or headphones, all in the absence of connection to telephone and data networks and connection to the mains.

In addition, the device is equipped with other elements that fulfill survival-related functions, namely a GPS locator for localization and a radio frequency receiver and transmitter for communication, both connected to the motherboard.

The radio frequency receiver and transmitter can transmit on VHF (Very High Frequency) on channels 16 and 70 or on the 2,187 kHz frequency on LSD (Digital Selective Calling), used by emergency and rescue services.

In order to facilitate repair, the base hardware has a modular structure, so that individual modules can be replaced independently.

The device may also incorporate autonomous humidity and temperature sensors connected to the motherboard through external ports, such as USB but not limited to, in order to collect data useful for survival.

The device can also incorporate a 3D printer connected to the motherboard via an external port, so that physical items useful for survival can be manufactured.

The information contained in the database can be updated through the internet by connecting the device to a central server with a database located in the cloud, connecting to the internet via Wi-Fi or local network through an external port. Logically, such updating of the devices is done in normal situations when the connection to the cloud is available, to be used later the information when such connection may no longer be available. The information from the central server can also be provided on a physical medium for updating on the devices.

The central server updates the database with the advances that may occur in the field through software that incorporates a research analysis algorithm and a robotic system that integrates input information from users, combining such information through artificial intelligence to create patterns of decision-making and response to survival situations. The database can be proprietary or open, so that it is accessible to any user.

The database, in a broader form, can also incorporate all the knowledge accumulated by mankind in the field from the most ancient times to the present, from the most elementary principles of survival to a developed society, including engineering, medicine, etc., thus allowing not only survival but also the reconstruction or creation of a new civilization.

In addition, the base hardware can be connected to a robotic machine by inserting itself into said machine, which is equipped with articulated limbs and sensors, so that it can move and perform survival techniques contained in the internal memory, being able to train the user of the device and interact with it.

Throughout the description and the claims, the word "comprises", and variants thereof are not intended to exclude other technical features, components or steps. To those skilled in the art, other objects, advantages and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### BRIEF DESCRIPTION OF THE DRAWINGS

To complement the description being made and in order to aid in a better understanding of the features of the invention, there is attached as an integral part of said description, a set of drawings wherein, illustratively and not limitatively, the following has been depicted:
Figure 1 shows a schematic representation of a preferred embodiment of the self-contained electronic multimedia survival device subject of the present invention.
Figure 2 shows a schematic representation of a preferred embodiment of the Multimedia autonomous electronic survival device subject of the present invention in communication with the central server for updating.
Figure 3 shows a schematic representation of another preferred embodiment of the self-contained electronic multimedia survival device subject of the present invention with the device inserted into a robotic machine.

### PREFERRED EMBODIMENT

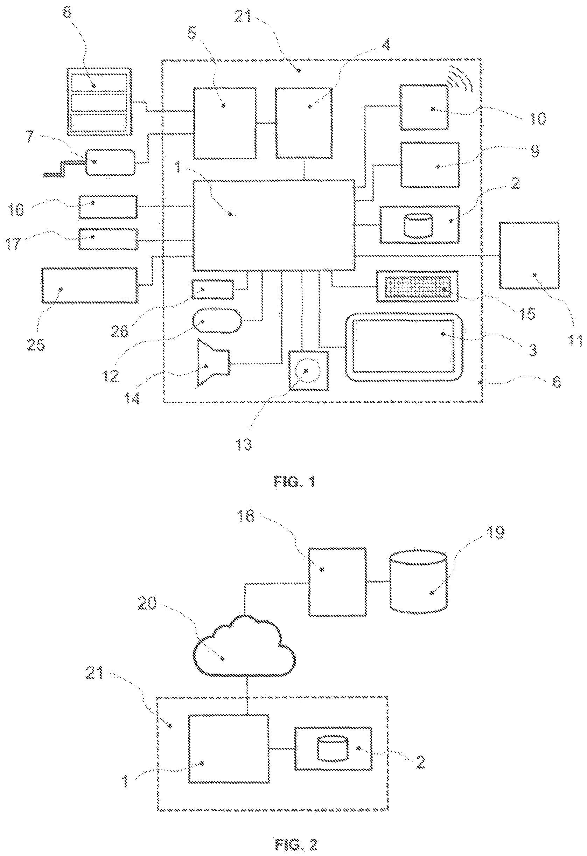

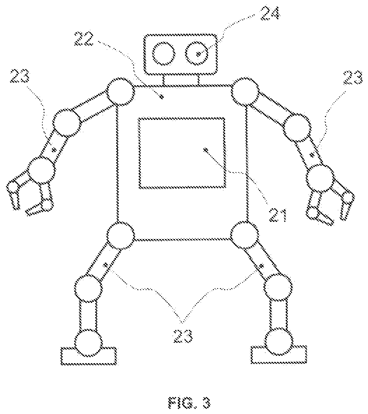

Using the numbering adopted in Figures 1, 2 and 3 of the present invention.

In order to identify the elements composing the Multimedia autonomous electronic survival device object of the present invention, we proceed to the description of said elements for three preferred embodiments of the invention.

In a preferable embodiment, the Multimedia autonomous electronic survival device object of the present invention is formed, at least, by a base hardware (21) consisting of a motherboard (1) equipped with an electronic microprocessor and, connected thereto, an internal memory (2), a series of input and output peripheral elements among which is a touch screen (3), a battery (4) and an electrical power supply (5) of the assembly, all the above in mounted in a mechanical enclosure (6).

The power supply (5), in addition to being able to connect to the mains, incorporates elements of autonomous and renewable energy supply, such as a dynamo (7) that allows charging the battery (4) and a plate or plates of photovoltaic solar energy (8) for the same purpose, so that the device can operate autonomously in the absence of mains. The power supply (5) is equipped with random rectification of current to adapt to these renewable energy sources.

The internal memory (2) is equipped with a mirroring system or RAID (redundant array of independent disks) and contains a database containing knowledge about survival and its techniques in an orderly and structured manner.

In a preferred embodiment, the system also incorporates an external memory system (11) with a backup of the internal memory (2), connecting to the motherboard (1) through an external port.

The device contains software with both a visual and acoustic interface that allows access to the database information through the input and output peripherals, running on any of the operating systems available on the market.

The input peripherals consist of a microphone (12), a camera (13), a keyboard (15) and the touch capability of the display (3) the output peripherals consist of the display (3), speakers (14) and a port for headphone connection. Additionally, the device also incorporates as an output peripheral a hologram projector (26).

In this way, the user can access the information in the database through menus on the touch screen (3) and oral commands through the microphone (11), receiving the information visually on the screen (3) by means of image, video and text, and by sound through the speakers (14) or headphones, all in the absence of connection to telephone and data networks and connection to the mains.

In addition, the device is equipped with other elements that perform survival-related functions, namely a GPS locator (9) for localization and a radio frequency receiver and transmitter (10) for communication, both connected to the motherboard (1).

The radio frequency receiver and transmitter (10) can transmit on VHF (Very High Frequency) on channels 16 and 70 or on the 2,187 kHz frequency on LSD (Digital Selective Calling), used by emergency and rescue services.

In order to facilitate repair, the base hardware (21) has a modular structure, so that individual modules can be replaced independently.

The device also incorporates in a preferred embodiment humidity (16) and temperature sensors (17) autonomous and connected to the motherboard (1) through external ports, such as USB in a non-limiting way, in order to collect data useful for survival.

The device may also incorporate in a preferred embodiment a 3D printer (25) connected to the motherboard via an external port, so that physical items useful for survival can be manufactured.

In a preferred embodiment, the information contained in the database can be updated via the internet through the connection of the device to a central server (18) with a database (19) located in the cloud (20), connecting to the internet via Wi-Fi or local network through an external port. Logically, such updating of the devices is performed in normal situations in which the connection to the cloud is available, for later use of the information when the connection to the cloud may no longer be available. The information from the central server (18) may also be provided on a physical medium for updating on the devices. The database may be proprietary or open, such that it is accessible to any user.

The central server (18) updates the database (19) with the advances that may occur in the field through software that incorporates an algorithm for analysis of the investigations and a robotic system that integrates input information from users, combining such information through artificial intelligence to create patterns of decision making and response to survival situations.

The database (19), in a broader form, can also incorporate in another preferred embodiment all the knowledge accumulated by mankind in the field from the most ancient times to the present, from the most elementary principles of survival to a developed society, encompassing engineering, medicine, etc., thereby enabling not only survival but also the reconstruction or creation of a new civilization.

Furthermore, in a third preferred embodiment, the base hardware (21) connects to a robotic machine (22) by inserting itself into said machine (22), which is equipped with articulated limbs (23) and sensors (24), so that it can move and perform survival techniques contained in the internal memory (2), being able to train the user of the device and interact with it.

## Claims

1. Multimedia autonomous electronic survival device **characterized in that** it is formed, at least, by a base hardware (21) formed by a motherboard (1) equipped with an electronic microprocessor and, connected to it, an internal memory (2) , a series of input and output peripheral elements among which is a touch screen (3), a battery (4) and an electric power supply (5) of the assembly, all of which are mounted in a mechanical enclosure (6), the internal memory (2) containing a database containing knowledge about survival and its techniques in an orderly and structured form, the device is equipped with a software with a visual and acoustic interface that allows access to the information in the database through the input and output peripherals, incorporating a radio frequency receiver and transmitter (10) for communication and a GPS locator (9) for localization connected to the base plate (1), and incorporating the power supply (5) elements of autonomous and renewable energy supply in addition to being able to connect to the mains.

2. Multimedia autonomous electronic survival device according to claim 1 where one of the autonomous and renewable energy supply elements is a dynamo (7) that allows charging the battery (4), so that the device can operate autonomously in the absence of mains power.

3. Autonomous multimedia electronic survival device according to claim 1 wherein one of the autonomous and renewable energy supply elements is a plate or a set of photovoltaic solar energy plates (8), so that the device can operate autonomously in the absence of mains power.

4. Multimedia autonomous electronic survival device according to claim 1 wherein the power supply (5) is provided with random current rectification to adapt to energies of renewable origin.

5. Autonomous electronic multimedia survival device according to claim 1 wherein the internal memory (2) is provided with a mirroring or RAID (redundant array of independent disks) system.

6. Autonomous electronic multimedia survival device according to claim 1, wherein the system also incorporates an external memory system (11) with a backup of the internal memory (2), connecting to the motherboard (1) via an external port.

7. Autonomous electronic multimedia survival device according to claim 1 wherein the input peripherals consist of a microphone (12), a camera (13), a keyboard (15) and the touch capability of the display (3), and the output peripherals consist of the display (3), speakers (14) and a port for headphone connection, so that the user can access the information in the database through menus on the touch screen (3) and oral commands through the microphone (12), receiving the information visually on the screen (3) by image, video and text, and by sound through the speakers (14) or headphones, all in the absence of connection to telephone and data networks and connection to the mains.

8. Multimedia autonomous electronic survival device according to claim 1 wherein the radio frequency receiver and transmitter (10) can broadcast on VHF (Very High Frequency) on channels 16 and 70 or on the 2,187 kHz frequency on LSD (Digital Selective Calling).

9. Multimedia autonomous electronic survival device according to claim 1 wherein, in order to facilitate its repair, the base hardware (21) has a modular structure, so that the various modules can be replaced independently.

10. Multimedia autonomous electronic survival device according to claim 1 wherein it incorporates autonomous humidity (16), and temperature (17) sensors connected to the motherboard (1) through external ports, such as USB, in order to collect data useful for survival.

11. Multimedia autonomous electronic survival device, according to claim 1, wherein the device incorporates a 3D printer (25) connected to the motherboard (1) via an external port, so that physical items useful for survival can be manufactured.

12. Multimedia autonomous electronic survival device according to claim 7 wherein the device incorporates as an additional output peripheral a hologram projector (26).

13. Multimedia autonomous electronic survival device according to claim 1 where the information contained in the database can be updated via the internet through the connection of the device with a central server (18) with a database (19) located in the cloud (20), connecting to the internet via W¡-Fi or local network through an external port, being the database can be proprietary or open, so that it is accessible to any user.

14. Multimedia autonomous electronic survival device according to claim 13 wherein the information from the central server (18) is provided on a physical medium for updating on the devices.

15. Multimedia autonomous electronic survival device according to claim 13 wherein the central server (18) updates the database (19) with any developments that may occur in the field through software incorporating a research analysis algorithm and a robotic system that integrates input information coming from users, combining such information through artificial intelligence to create patterns for decision making and response to survival situations.

16. Multimedia autonomous electronic survival device according to claim 1 wherein the base hardware (21) is connected to a robotic machine (22) by inserting itself into said machine (22), which is equipped with articulated limbs (23) and sensors (24), so that it can move and perform survival techniques contained in the internal memory (2), being able to train the user of the device and ¡interact with him.
